Europäisches Patentamt

European Patent Office

Office européen des brevets

(19)

(11) Publication number: **0 254 518**
**A2**

# (12) EUROPEAN PATENT APPLICATION

(21) Application number: **87306407.5**

(22) Date of filing: **20.07.87**

(51) Int. Cl.⁴ **G04G 15/00 , H04N 5/76**

(30) Priority: **21.07.86 JP 171263/86**
**21.07.86 JP 171264/86**

(43) Date of·publication of application:
**27.01.88 Bulletin 88/04**

(84) Designated Contracting States:
**DE FR GB NL**

(71) Applicant: **Matsushita Electric Industrial Co.,
Ltd.
1006, Oaza Kadoma
Kadoma-shi Osaka-fu, 571(JP)**

(72) Inventor: **Kajitani, Masahiko
7-1, Naritahigashi-machi
Neyagawa-shi(JP)**
Inventor: **Takeda, Kiyoshi
13-15, Nanseidai-4-chome
Katano-shi(JP)**
Inventor: **Isono, Koji
22-7, Korinishinocho
Neyagawa-shi(JP)**

(74) Representative: **Woodin, Anthony John et al
Fitzpatricks 53A High Street
Huntingdon Cambridgeshire PE18 6AG(GB)**

(54) **Programming member for program timer recording.**

(57) A programming member for program timer recording has a plurality of bar codes (II, I2, 34, 4I, 42), each of which bar codes includes start bits (I) indicating the start of the bar code, data bits (2, 20, 22) representing program timer recording information and stop bits (I4, I5) indicating the end of the bar code, which bits are arranged in this order, and which bar codes are provided for respective items of the program timer recording (for example, an item of CHANNEL, an item of DATE, an item of START TIME and an item of END TIME), and, in each of the items of the program timer recording, at least one of the start bits and the stop bits being provided with an attribute for the program timer recording which represents the fact that the associated bar code relates to the CHANNEL, DATE, START TIME, or END TIME. As means for additionally providing the above-mentioned attribute, the bit code of at least one of the start bits (I) and the stop bits (I4, I5) are changed in accordance with each of the items of the program timer recording.

FIG. 3

## PROGRAMMING MEMBER FOR PROGRAM TIMER RECORDING

### BACKGROUND OF THE INVENTION

The present invention generally relates to a programming member for program timer recording, and particularly relates to a programming member for program timer recording which is useful, for example, in a video tape recorder (hereinafter abbreviated to VTR) having a programmed timer recording function in which a power supply is automatically turned on to record a predetermined television broadcasting program when a predetermined time has come and the power supply is turned off to terminate the recording after a predetermined time period has elapsed from the initiation of the recording, particularly in the case where such programmed timer recording is carried out by using an optical bar code reader.

Referring to Fig. I, a description will be made of a prior art example in which timer recording in a VTR is performed by reading out the content of a bar-coded program by using a bar code reader.

In Fig. I, reference numeral 101 designates a VTR in which a desired channel for recording, a date (a day of the week), a recording start time, and a recording end time can be timer-programmed. A television receiver 102 is connected to the VTR 101. Reference numerals 103A, 103B, 103C and 103D designate programming members for program timer recording (hereinafter generally referred to as a program sheet 103) which have respective programs, such as a desired channel for recording, a date (a day of the week), a recording start time, and a recording end time printed thereon in a bar-coded style.

Reference numeral 104 designates an optical bar code reader which is used to read a bar code for a desired program from the program sheet 103 and to input data for program timer recording into the VTR 101 through a cord 105.

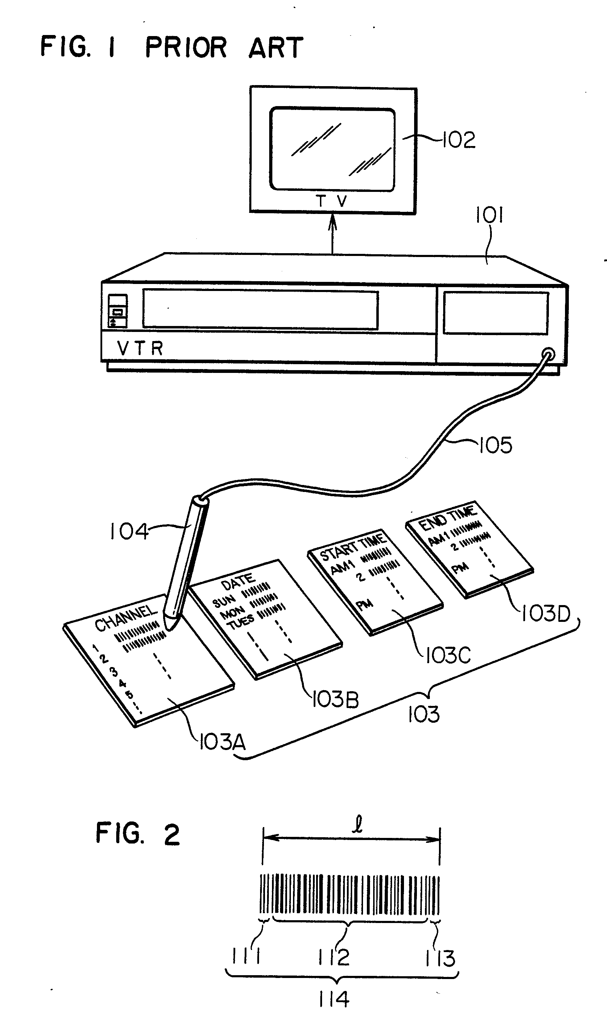

Fig. 2 is a pattern diagram showing an example of a bar code in the above-mentioned prior art program sheet 103. In the drawing, start bits III are provided at the beginning of the whole bar code 114. The bar code reader 104 shown in Fig. I is designed to read the data following the start bits III when it scans the start bits III. Numeral 112 designates data bits 112 having coded a program content which is to be inputted into the VTR 101 through the bar code reader 104. The data bits 112 are followed by stop bits 113 which are specified bits for indicating the end of a series of bar codes starting from the start bits III.

However, the above-mentioned prior art bar code structure has a disadvantage that it is impossible to discriminate between a plurality of data, each of which has the same data length $l$, as data having attributes different from each other. Accordingly, in order to discriminate data in view of their attributes, it is necessary to make the data length different from each other between data having different attributes, or to insert a code representing the attribute of data into bar code data. Thus, the prior art bar code structure has defects such that the overall length of the bar code 114 increases, a printing area of the bar code 114 becomes broad, and the redundancy of data increases. More in detail, the prior art bar code structure has problems such that, when making television program timer recording by using a bar code, if it is required to display information relating to the program timer recording start time and the program timer recording end time, it becomes necessary to provide information indicating figures representing time as well as information indicating attributes of the program timer recording such as the start, end, etc., and therefore the data length $l$ of a bar code increases.

### SUMMARY OF THE INVENTION

It is therefore an object of the present invention to solve the above-mentioned problems in the prior art bar code.

It is another object of the present invention to provide a programming member for program timer recording having bar codes having a relatively short length which can discriminate between data bits of the same data length as data representing a plurality of different attributes, such as "CHANNEL", "DATE", "START TIME", "END TIME", etc., which are desired to be recorded.

It is a further object of the present invention to provide a programming member for program timer recording provided with a bar code (cancel code) for giving a command for resetting program timer recording to a controlled electronic apparatus such as a VTR.

It is a still further object of the present invention to provide a programming member for program timer recording which makes it possible to collectively input attributive information such as "CHANNEL", "DATE", "START TIME" and "END TIME" to a VTR through a single time read scanning by using a bar code reader.

The above and other objects and features of the invention will appear in the following description and appended claims, reference being made to the accompanying drawings forming a part of this specification, wherein like reference numerals and symbols designate corresponding parts in the drawings.

## BRIEF DESCRIPTION OF THE DRAWINGS

Fig. 1 is an explanatory diagram showing an example of a conventional programming member for program timer recording and a program timer recording system employing the programming member for program timer recording;

Fig. 2 is a pattern diagram showing an example of a bar code to be printed on a conventional program sheet;

Fig. 3 is a plan view showing a main part of a programming member for program timer recording of a first embodiment of the present invention;

Figs. 4A and 4B are enlarged pattern diagrams respectively showing examples of bar codes to be printed on the programming member for program timer recording according to the present invention;

Figs. 5A and 5B are enlarged pattern diagrams respectively showing other examples of bar codes to be printed on the programming member for program timer recording according to the present invention;

Fig. 6 is a plan view showing a main part of a programming member for program timer recording of a second embodiment of the present invention;

Fig. 7 is a plan view showing a main part of a programming member for program timer recording of a third embodiment of the present invention;

Fig. 8 is a perspective view showing an example of the bar code reader for reading the programming member for program timer recording according to the present invention;

Fig. 9 is an explanatory diagram showing an example of using the bar code reader shown in Fig. 8; and

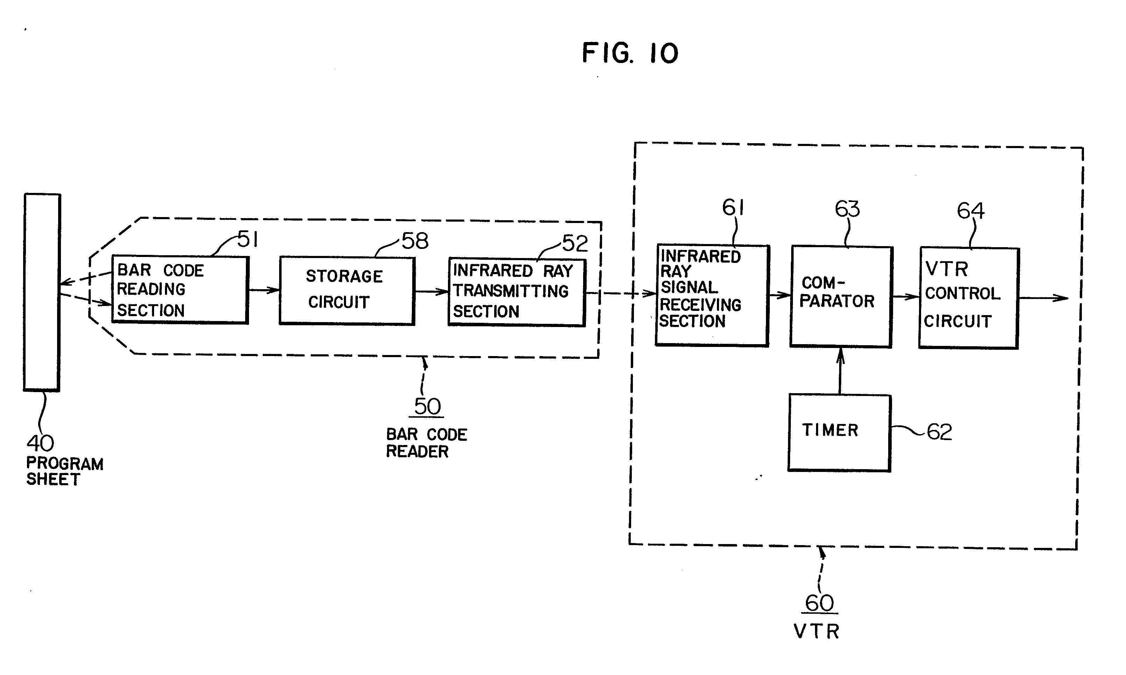

Fig. 10 is a block diagram showing an example of a system for performing program timer recording by using the programming member for program timer recording according to the present invention.

## DESCRIPTION OF THE PREFERRED EMBODIMENTS

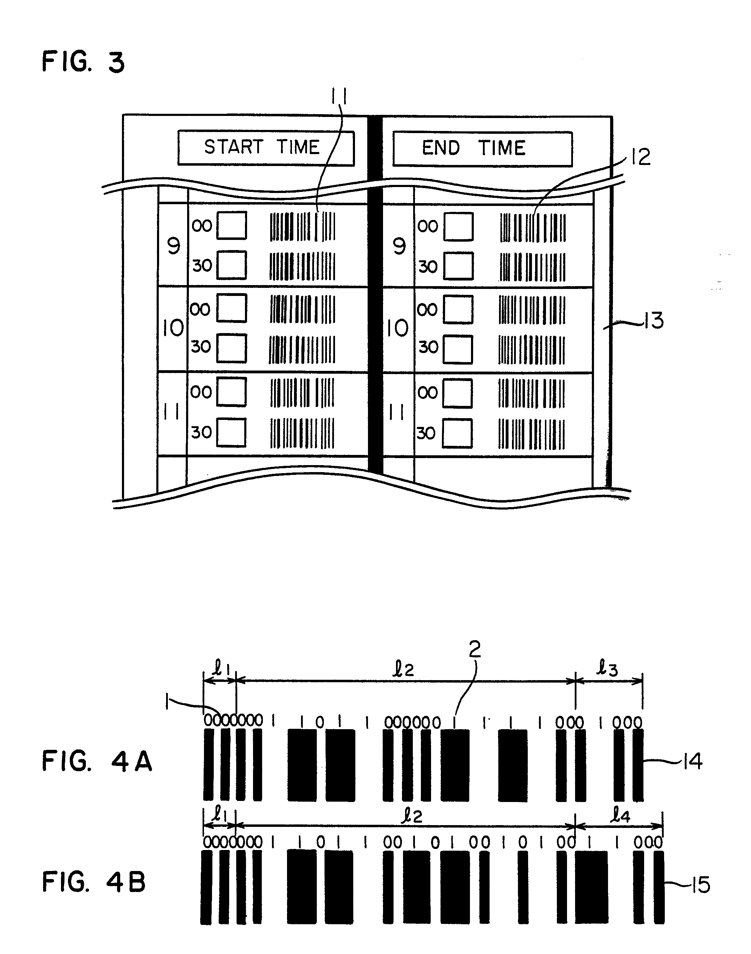

Fig. 3 is a plan view showing a main part of a programming member for program timer recording of a first embodiment of the present invention. In this embodiment, a programming member for program timer recording for use in a VTR will be described by way of example. As shown in Fig. 3, a bar code 11 representing START TIME of the program timer recording and a bar code 12 representing END TIME of the program timer recording are printed on a programming member for program timer recording 13 (hereinafter referred to simply as a program sheet 13) according to the present invention.

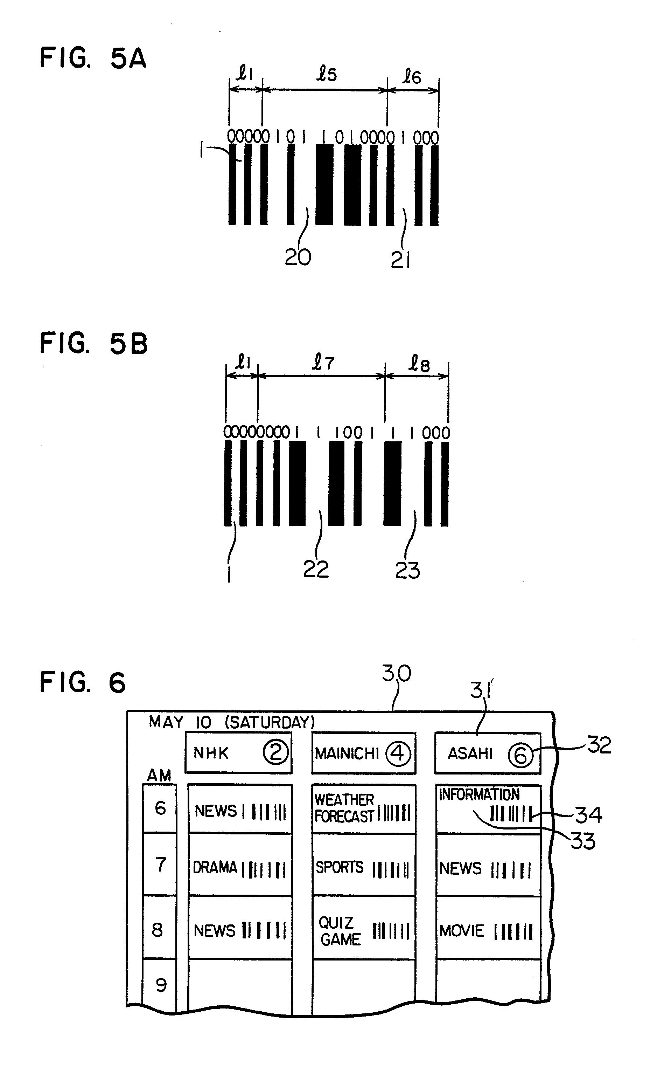

Figs. 4A and 4B are enlarged pattern diagrams showing an example of bar codes printed on the above-mentioned program sheet 13. In Figs. 4A and 4B, each of the bar codes contains start bits 1 having a length $l_1$ and data bits 2 which have a length $l_2$ and represent time. The data bits 2 in Fig. 4A represent 9:00, and the data bits 2 in Fig. 4B represent 9:30. Reference numeral 14 designates stop bits having a length $l_3$ which represent the completion of a series of bar codes starting from the start bits 1 in Fig. 4A, and, at the same time, the stop bits 14 indicate the fact that the time represented by the data bits 2 in Fig. 4A is START TIME. Reference numeral 15 designates stop bits having a length $l_4$ which represent the completion of a series of bar codes starting from the start bits 1 in Fig. 4B, and, at the same time, the stop bits 15 indicate the fact that the time represented by the data bits 2 in Fig. 4B is END TIME. That is, the attributes, such as the start time and the end time, of the numerical information represented by the data bits 2 are indicated by the stop bits 14 and 15, respectively. Therefore, the length of the bar codes 11 and 12 shown in Fig. 13 becomes shorter than the length $l$ of the conventional bar code shown in Fig. 2.

Although each of the bar codes I1 and I2 shown in Fig. 3 which respectively represent START TIME and END TIME is formed by coding a four-digit number and therefore the bar codes I1 and I2 have the same code length, the stop bits I4 of the bar code I1 representing START TIME and the stop bits I5 of the bar code I2 representing END TIME are different in code from each other, so that a bar code reader (which will be described later) judges whether the time represented by the bar codes I1 and I2 is the start time or the end time on the basis of the stop bits I4 and I5 and stores the respective program timer recording data, namely, the start time 9:00 and the end time 9:30, in respective storage areas of a storage circuit.

Thus, since the bar codes respectively representing START TIME and END TIME contain the respective stop bits I4 and I5 different in code from each other as described above, the bar code reader can judge whether a read-out bar code represents start time data or end time data on the basis of the stop bits I4 and I5 and stores the read-out bar code in the respective storage areas of the storage circuit. Further, at the same time, the stop bits I4 and I5 make it possible to decide whether a series of bar code has completed or not.

While the above-described embodiment shows the case where the stop bits indicate the fact that the time represented by the data bits is the start time or the end time, it is also possible to use the start bits in order to indicate the fact that the time represented by the data bits is the start time or the end time.

Further, the data bits 2 may be used to represent not only numerical information indicative of time, but also numerical information indicative of a channel number of a TV as shown in Fig. 5A. Fig. 5A shows a bar code containing start bits I having a length $l_1$ and data bits 20 which have a length $l_5$ and which represent "3" in this example. Reference numeral 2I designates stop bits having a length $l_6$, and the stop bits 2I simultaneously represent an attribute of numerical information of the data bits 20, namely, the stop bits 2I indicate that the data bits 20 represent a channel number.

Fig. 5B, on the other hand, shows an example in which the data bits represent date. In Fig. 5B, numeral I designates start bits I having a length $l_1$ and numeral 22 designates data bits which have a length $l_7$ and which represent "4" in this example. Numeral 23 designates stop bits which have a length $l_8$ and which simultaneously represent an attribute of numerical information of the data bits 22, namely, the stop bits 23 indicate that the data bits 22 represent a date. Therefore, Figs. 5A and 5B represent the third channel and the fourth day, respectively.

Fig. 6 is a plan view showing a main part of a program sheet of a second embodiment of the present invention. In Fig. 6, numeral 30 designates a program sheet which corresponds to the program sheet I3 shown in Fig. 3 and which may be a sheet of a specific page of a magazine in which TV programs are printed. Reference numeral 3I designates names of broadcasting stations, 32 designates channel number, and 33 designates titles of programs, all of which are printed on the program sheet 30. The program sheet 30 shown in Fig. 6 is different from the program sheet I3 shown in Fig. 3 in that the former contains the bar code 34 which includes a series of bar codes representing a channel position, date, start time and end time, and in that one channel position is assigned to one broadcasting station in all the country to thereby standardize the broadcasting program code. When making a comparison between the case where one channel position or one broadcasting station code is alloted to each individual broadcasting station and the case where such allotment is not made, in the former case, there is necessarily one-to-one correspondence between the channel positions and the broadcasting stations, so that no erroneous channel selection takes place, but in the latter case, there is a possibility such that the same channel position is bar-coded with respect to a plurality of different broadcasting stations, which are listed on a program timer recording table but which have respective different reception frequencies, so that it becomes impossible to perform program timer recording of the program of a broadcasting station having a reception frequency different from that of the channel position.

As described above, by having the bar code 34 formed of a series of codes including the channel position, date, start time and end time, it is made possible to complete program timer recording by performing a single time of scanning with a bar code reader. Further, if the channel position of a bar code 34 is alloted to each individual broadcasting station, it is possible to prevent erroneous channel selection from occurring while program timer recording is performed.

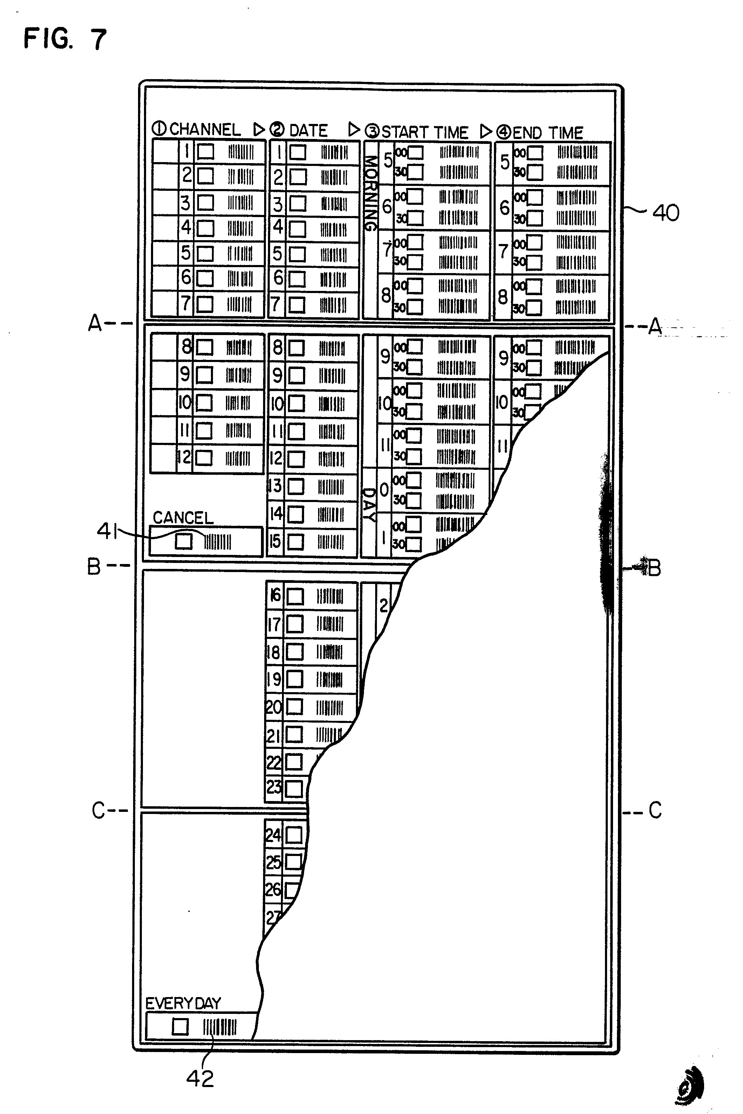

Fig. 7 is a plan view showing a program sheet of a third embodiment of the present invention. In Fig. 7, a program sheet 40 made of a synthetic resin is able to be folded, for example, respectively along an A-A line, a B-B line and a C-C line shown in Fig. 7, and respective columns, CHANNEL, DATE, START TIME and END TIME, are provided in sequence from the left to the right on one surface of the sheet 40, and respective corresponding bar codes are printed in those columns. Further, a bar code 4I for canceling (or

resetting) program information, which has once been registered (or stored), and a bar code 42 for performing image recording every day are provided on this program sheet 40. In Fig. 7, a rectangular mark provided on the left side of each of the bar codes is a start mark indicating a position on which a bar code reader should be placed before each bar code is scanned by the bar code reader.

The same idea as that described with respect to Figs. 4A and 4B and Figs. 5A and 5B is also applicable to the program sheets 30 and 40 illustrated in Fig. 6 and Fig. 7, that is, the stop bits (or start bits, if necessary) may be provided with an attribute of each program timer recording, whereby it becomes possible to suppress a defect such that an area occupied by printing becomes large due to a possible redundant length of each bar code.

The following table shows the relationship between the respective codes of start bits, data bits and stop bits, and various items of CHANNEL, DATE, START TIME and END TIME in the above-described embodiments of the present invention.

| CODE | START CODE | DATE CODE | STOP CODE |
|---|---|---|---|
| CHANNEL | 0000 | 2 DIGITS | 01000 |
| DATE | 0000 | 2 DIGITS | 11000 |
| START TIME | 0000 | 4 DIGITS | 01000 |
| END TIME | 0000 | 4 DIGITS | 11000 |

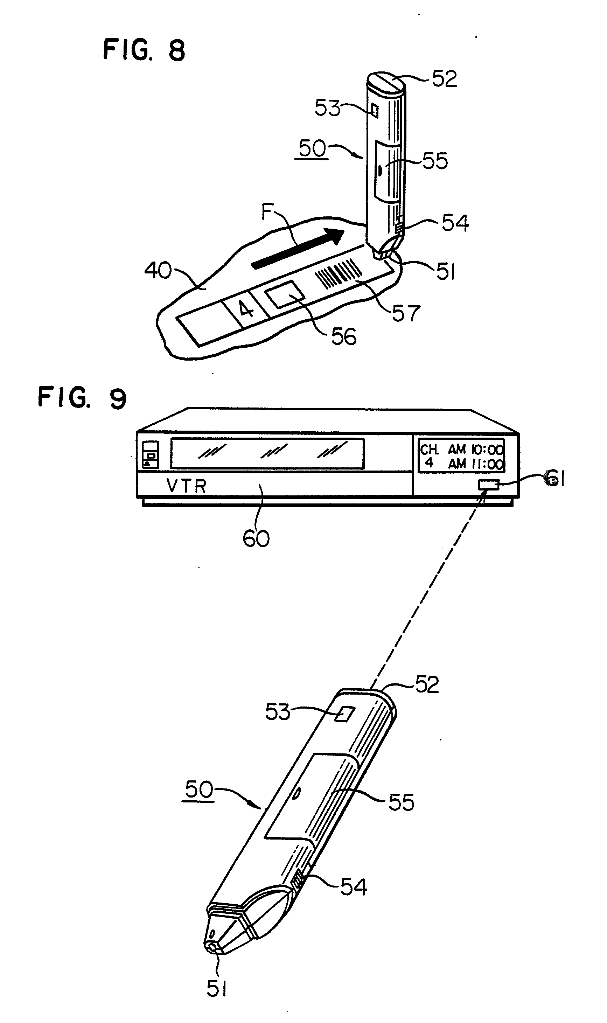

Fig. 8 is a perspective view showing an example of an optical bar code reader for reading the program sheet 40 according to the present invention which is partly shown in the drawing. In Fig. 8, in view of easier understanding, a part of the bar code sheet 40 having bar codes printed thereon is shown exaggeratedly as compared with the size of the bar code reader. In the drawing, a pen-type bar code reader 50 suitable for gripping is provided at its one end with a bar code reading section 51 comprising a light emitting section and a light receiving section, and it is provided at its opposite end with an infrared ray transmitting section 52 for emitting an infrared ray for transmitting the information, which has been read and processed by the bar code reading section 51, into a VTR, which comprises a program timer recording subject control section, as input program timer recording information by way of a wireless system.

The bar code reader 50 further comprises a transmission switch button 53 which is actuated when depressed to cause the infrared ray transmitting section 52 to emit an infrared ray, a power on/off switch 54 for switching on and off a battery for energizing the bar code reader 50, and a battery accommodating cover 55 for accommodating the battery within a casing of the bar code reader 50.

Next, a description will be made of the operation of program timer image recording in a VTR by using the bar code reader 50.

First, assuming that CHANNEL 4 is desired to be selectively inputted, the bar code reading section 51 of the bar code reader 50 having the switch 54 turned on is made to abut vertically on a start mark (designated by reference numeral 56 in Fig. 8) in the channel column 4 on the program sheet 40 in Fig. 7, and then the bar code reading section 51 is made to trace or scan a bar code 57 in the direction of an arrow F in Fig. 8, while maintaining the bar code reading section 51 to be in contact with the program sheet 40. Then, the bar code 57 representing CHANNEL 4 is photoelectrically converted by the bar code reading section 51, and the thus converted bar code is stored in a storage circuit (designated by reference numeral 58 in Fig. l0) installed in the bar code reader 50.

Thereafter, in the same way as described above, DATE, START TIME and END TIME for the desired image recording are selected from the program sheet 40 and are stored in the bar code reader 50.

After completion of the predetermined reading operation, the transmission switch button 53 is depressed while maintaining the infrared ray transmitting section 52 of the bar code reader 50 to face an infrared ray signal receiving section 6l of a VTR 60, as shown in Fig. 9. Then, the program timer image recording information stored in the storage circuit 58 is converted into an infrared ray signal and it is transmitted from the infrared ray transmitting section 52 to the infrared ray signal receiving section 6l of the VTR 60. In the VTR 60, the broadcasting date and the start time in the program timer image recording

5

information transmitted to the VTR 60 are compared with the present time counted by a timer (designated by reference numeral 62 in Fig. l0) by a comparator (designated by a reference numeral 63 in Fig. l0). When the counted present time coincides with the transmitted broadcasting date and start time, a VTR control circuit (designated by reference numeral 64 in Fig. l0) is caused to select the channel position indicated by the transmitted program timer image recording information and to set the VTR 60 to the image recording mode and to control the VTR 60 to continue the program timer image recording until the program end time is reached.

Further, the program timer recording information which has once been stored in the storage circuit 58 of the bar code reader 50 can be canceled when the storage circuit 58 is reset upon reading the bar code 4l, which is illustrated in Fig. 7 by way of example, by using the bar code reader 50.

It is further understood by those skilled in the art that the forgoing description is made with reference to preferred embodiments of the present invention but that various changes and modifications may be made according to the present invention without departing from the spirit and scope thereof.

**Claims**

l. A programming member for program timer recording comprising a plurality of bar codes (ll, l2, 34, 4l, 42) each thereof including start bits (l), data bits (2, 20, 22) and stop bits (l4, l5, 2l, 23) arranged in this order, said start bits (l) representing a beginning part of said bar code, said ata bits representing program timer recording information, said stop bits representing an end part of said bar code, and at least one of said start bits and said stop bits being provided with information representing an attribute of the program timer recording information.

2. A programming member for program timer recording according to Claim l, in which said information representing the attribute of the program timer recording information is at least one of CHANNEL, DATE, START TIME and END TIME.

3. A programming member for program timer recording according to Claim l, further comprising an optical bar code reader and a bar code (4l) for providing a command for resetting the program timer recording information read by said optical bar code reader (50).

4. A programming member for program timer recording according to Claim 2, further comprising an optical bar code reader and a bar code (4l) for providing a command for resetting the program timer recording information read by said optical bar code reader (50).

5. A programming member for program timer recording according to Claim l, in which the program timer recording information represents BROADCASTING STATION CHANNEL, DATE, START TIME and END TIME, and in which said plurality of bar codes representing the respective program timer recording information are arranged by being sectioned on one sheet member (l3, 30, 40) bearing respective corresponding numerals.

FIG. I  PRIOR ART

FIG. 2

## FIG. 3

## FIG. 4 A

## FIG. 4 B

FIG. 5A

$\ell_1$     $\ell_5$     $\ell_6$

00000 1 0 1   1 0 1 0000 1 000

20     21

FIG. 5B

$\ell_1$     $\ell_7$     $\ell_8$

00000000 1   1 100 1   1 1 000

22     23

FIG. 6

| | | MAY 10 (SATURDAY) | | | 30 | 31 |
| --- | --- | --- | --- | --- | --- | --- |

| AM | NHK ② | MAINICHI ④ | ASAHI ⑥ |
| --- | --- | --- | --- |
| 6 | NEWS \|\|\|\|\| | WEATHER FORECAST \|\|\|\|\| | INFORMATION \|\|\|\|\| |
| 7 | DRAMA \|\|\|\|\|\| | SPORTS \|\|\|\|\| | NEWS \|\|\|\|\| |
| 8 | NEWS \|\|\|\|\|\| | QUIZ GAME \|\|\|\|\| | MOVIE \|\|\|\|\| |
| 9 | | | |

# FIG. 7

0 254 518

FIG. 8

FIG. 9

# FIG. 10

40 PROGRAM SHEET

50 BAR CODE READER

- 51 BAR CODE READING SECTION
- 58 STORAGE CIRCUIT
- 52 INFRARED RAY TRANSMITTING SECTION

60 VTR

- 61 INFRARED RAY SIGNAL RECEIVING SECTION
- 63 COMPARATOR
- 64 VTR CONTROL CIRCUIT
- 62 TIMER

0 254 518